# FASCICULE DE BREVET EUROPEEN

(11) **EP 4 051 412 B1**
(45) Date de publication et mention de la délivrance du brevet: **19.06.2024**
(21) Numéro de dépôt: 20820474.3
(22) Date de dépôt: 01.11.2020
(51) Int. Cl.: B01D 53/18, B01D 45/04, B01D 50/40, B01D 45/12, B01D 47/02

(54) **DISPOSITIF DE FILTRATION DE GAZ POLLUÉS PAR ABSORPTION**
VORRICHTUNG ZUM FILTERN VON VERUNREINIGTEM GAS DURCH ABSORPTION
DEVICE FOR FILTERING POLLUTED GAS BY ABSORPTION

(30) Priorité: 03.11.2019 FR 1912317
(43) Date de publication de la demande: 07.09.2022
(73) Titulaire: NANOTEC FILTER, SASU, 54000 Nancy (FR)
(72) Inventeur: WEBER, Jean-Charles, 54110 Sommerviller (FR)
(74) Mandataire: Vièl, Frédérique
(86) Numéro de dépôt international: PCT/FR2020/000255
(87) Numéro de publication internationale: WO 2021/084168

(56) Documents cités:
- FR-A- 2 698 160
- FR-A- 2 784 307
- KR-A- 20110 102 762

## Description

L'invention concerne un dispositif permettant de traiter par voie humide, dans une même enceinte, des effluents gazeux contenant des particules à spectre granulométrique très étendu ainsi que des gaz solubles, condensables ou réactifs et des contaminants biologiques. Ce dispositif est de de type cyclonique, qui dans le contexte de l'invention, génère dans une enceinte un vortex unidirectionnel.

### Etat de la technique antérieure

Dans le domaine de la filtration des gaz destinés à la dépollution de l'atmosphère ou des ambiances de travail, il existe de nombreuses techniques de séparations, par voie sèche ou humide dont la mise en oeuvre dépend de la nature physico chimique des éléments à séparer, de leur taille et de leur concentration.

Les filtres, dits secs, les plus utilisés pour la filtration des poussières et aérosols contenus dans l'air sont les médias fibreux à textile naturel ou synthétique, dont les contraintes d'utilisation sont liées à l'augmentation des pertes de charges dues au colmatage, ainsi qu'aux nettoyages et remplacements fréquents. L'utilisation des cyclones secs est limitée par sa faible efficacité pour les particules inférieure à 10 microns, par sa perte de charge importante créée par le vortex central et par la création par fractionnement de fines particules de trop petite taille pour être retenues. Les électrofiltres sont principalement utilisés pour la filtration des poussières et aérosols ; leur efficacité varie et évolue selon la nature, la taille, la concentration des polluants et l'encrassement des collecteurs entrainent les phénomènes de relargage ou de claquage. Pour la filtration des gaz, la technique par voie sèche la plus répandue est l'adsorption sur charbons actifs ou zéolites ; l'efficacité de ces médias dépend de la nature et concentration des gaz, de la température et de l'empoussièrement ; les limites d'utilisation sont liées aux coûts de changement fréquent, de perte de charge et de maintenance ainsi qu'aux risques d'incendie.

Il est connu dans le domaine de la filtration des gaz par voie humide, de nombreux types d'installation de contacteur gaz-liquide comme les colonnes de lavage à garnissage, à plateaux, à film à bulles, à jet immergé, les colonnes et tunnels à pulvérisation, les laveurs venturi, les mélangeurs statiques, les cyclones à condensation et/ou pulvérisation et des dispositifs mettant en rotation un liquide de transfert par implantation dans le liquide de turbines ou déflecteurs.

Dans le cas des colonnes ou tours de lavage, afin d'augmenter le rendement d'épuration, il est nécessaire d'agir sur les paramètres régissant les mécanismes de transfert comme la surface de contact qui doit être la plus grande possible, le garnissage des colonnes ou des tours de lavages remplissant cette fonction, le temps de séjour et la température. La surface d'échange est créée par le ruissellement d'un liquide de transfert sur un garnissage de taille, forme et nature très divers, formant de grandes surfaces de films liquides. Ces techniques permettent de transférer les polluants de la phase gaz vers la phase liquide. Ces dispositifs sont positionnés verticalement et le déplacement du liquide suit une trajectoire du haut vers le bas, déterminé principalement par la gravité, à contre-courant des gaz. Le débit de liquide doit être suffisant pour assurer le mouillage complet des surfaces du garnissage tout en évitant la saturation par engorgement. Le débit de gaz est déterminé par la capacité du liquide à réaliser l'absorption physique ou chimique en respectant les temps de séjour et les vitesses de passage limitées par le réenvol de gouttelettes. On entend par absorption le processus de transfert de masse d'un composé de la phase gazeuse vers la phase liquide.

Ces colonnes ou tours de lavage présentent des inconvénients. Pour améliorer le rendement de transfert des installations de filtration par voie humide de type tour ou colonne de lavage, il est nécessaire d'intervenir sur les paramètres qui régissent les mécanismes de transfert comme la température et le temps de contact mais surtout la surface de contact qui doit être la plus grande possible. Cependant les inconvénients sont nombreux et limitent le champ d'application et l'efficacité du dispositif. Les principaux inconvénients sont les gros volumes occupés par le garnissage et les dévésiculeurs, l'importante perte de charge qu'ils provoquent, la nécessité de mettre en place des pompes pour mettre en mouvement les importantes masses de liquide, les risques d'engorgement ou de mauvaise couverture liquide des surfaces de garnissage entrainant des rejets polluants. Le débit d'air est limité par le réenvol de gouttelettes chargées. L'encrassement, les opérations de remplacement régulières de la garniture affectent les coûts de maintenance. Le coût global énergétique, d'investissement et de maintenance est donc élevé. Par ailleurs, pour gérer une telle installation, un personnel qualifié est nécessaire.

La littérature brevet décrit de nombreuses utilisations de dispositifs mettant en rotation un liquide absorbant pour purifier l'air comme les cyclones humides ou les enceintes à agitation mécanique, où les écoulements sont conditionnés par l'implantation dans le liquide de turbines, déflecteurs, serpentins ou autres redresseurs. Il y a des brevets se rapportant à la technique décrite ci-avant, à savoir des dispositifs cycloniques pour filtrer l'air par voie humide utilisant l'eau ou autres substances liquides absorbantes obtenues par la condensation en surface de serpentins refroidis et/ou par buse de pulvérisation d'un liquide absorbant ou encore par ruissellement du liquide absorbant sur les parois. Ces dispositifs sont positionnés verticalement. Certains de ces dispositifs utilisant la force centrifuge comme moyen de séparation gaz/ liquide sont présentés dans les brevets GB A 2180776 « échangeur cyclonique pour la purification et la dépollution de l'air », EP 0597786 B1 « procédé et dispositif pour le traitement des atmosphères de travail utilisant un échangeur cyclonique ».

Dans le cas des cyclones humides, les surfaces humides sont créées par la pulvérisation d'un liquide absorbant dans l'entrée tangentielle et/ou par la condensation dans le cas des échangeurs cycloniques. Le débit de fonctionnement doit permettre de conserver le profil des écoulements particuliers recherchés tout en évitant une perte de charge trop importante et le réenvol de gouttelettes chargées.

Ces « cyclones humides » utilisés pour le lavage de gaz présentent des inconvénients limitant leur efficacité ou leurs applications. La position axiale de fonctionnement est verticale. L'influence de la gravité sur la trajectoire du liquide de lavage limite la maitrise des trajectoires de rencontre des éléments à filtrer avec le film pariétal tombant, en accélérant la décroissance du nombre de spire de liquide formée par cisaillement du film créé par la force centrifuge initiée par l'entrée tangentielle des gaz. Les autres surfaces interfaciales sont également affectées par la position verticale qui entraine une modification des écoulements, empêche leur contrôle en termes de surface et de trajectoires et limite les temps de contact.

Les échangeurs / laveurs cycloniques sont équipés de serpentins refroidis pour créer les surfaces humides et impactantes, dont la géométrie modifie le profil des écoulements triphasiques en termes d'allure et de vitesse. La présence de serpentins diminue la vitesse tangentielle et atténue la centrifugation ce qui diminue les taux de collection, en particulier sur les tailles moyennes de particules. La position verticale ainsi que la présence de serpentins modifient l'angle de zone de dépôt des particules qui passe de 15°pour un cyclone vide à 45°, ce qui entraine une diminution des surfaces collectrices liquides, de leurs longueurs, du temps de contact, et contribue largement au cisaillement et à la rupture prématurée des films liquides absorbants pariétaux. Les cyclones avec serpentins et/ou avec buse de pulvérisation favorisent une forte coalescence des vésicules liquides ce qui limite leurs surfaces absorbantes ; les vitesses et trajectoires de contacts entre le liquide filtrant et ses antagonistes sont réduites par la présence des serpentins.

La vitesse importante de l'écoulement au fond du cyclone, entraine une forte abrasion des grosses particules par chocs inter particulaires ou contre les surfaces de parois non humides, créant un taux important de production de fines particules qui ne sont pas retenues par le cyclone.

La remontée des gaz, dont la vitesse est fortement accélérée dans le vortex central, crée une importante perte de charge et favorise la création, l'arrachement et l'envol de gouttelettes au niveau du court-circuit situé à la base du tube central. Par ailleurs le réglage des vitesses est délicat car une vitesse trop grande des gaz associée à la pulvérisation, provoque et favorise l'entrainement de gouttelettes plus nombreuses vers la sortie, augmente la perte de charge, favorise la discontinuité du film liquide pariétal, ce qui augmente la fragmentation des particules n'ayant pas été en contact avec l'absorbant et contribue largement à la formation de très fines particules par abrasion. Il y a donc limitation de l'efficacité de filtration. L'élimination des aérosols liquides plus nombreux nécessite l'installation de dévésiculeurs volumineux, encrassables et coûteux en investissement et en consommation énergétique due aux pertes de charges supplémentaires. A contrario, une vitesse trop faible limite l'efficacité des mécanismes de transfert du procédé et favorise l'encrassement. Contrairement à l'invention, la fonction de filtration des échangeurs cycloniques n'acceptent pas, dans un même dispositif, des écarts de fonctionnement importants. Le temps de séjour et les surfaces absorbantes, ne sont pas significativement modifiables pour s'adapter aux fluctuations des conditions d'entrée des gaz, fréquentes en industrie, ce qui restreint l'efficacité globale de filtration, dès qu'il y a évolution de composition des éléments gazeux à traiter. Par ailleurs, l'implantation d'un groupe de refroidissement, d'une pompe de relevage ou de buses sont nécessaires lorsqu'il y a recyclage des liquides. La quantité de liquide collecteur fournie par la condensation ou par les buses de pulvérisation n'est que très peu adaptable à l'évolution des besoins.

Le brevet coréen KR20110102762(A) « air purifing apparatus using water » a pour objet un cas particulier de cyclone humide qui met en rotation un liquide absorbant en utilisant des turbines, déflecteurs ou autres agitateurs. Il décrit un aspirateur domestique pour nettoyer de l'air contaminé par des particules de poussières, comprenant une enceinte cylindrique contenant de l'eau. L'enceinte horizontale ou inclinée présente à une extrémité une entrée par laquelle l'air pollué pénètre tangentiellement dans l'enceinte à une vitesse suffisante pour mettre en rotation l'eau. L'eau retient les particules de poussières et l'air nettoyé ressort par une sortie non immergée dans le liquide à l'autre extrémité de l'enceinte. Ce dispositif est destiné en particulier à équiper des aspirateurs domestiques à la place des filtres papier ou textiles traditionnels qui laissent passer les fines poussières. Ce dispositif n'est pas conçu pour retenir sélectivement une large gamme de polluants incluant des particules solides à spectre granulométrique très large ; il est de faible efficacité pour la filtration des aérosols liquides ou des gaz polluants. Le dispositif met en mouvement tangentiel, grâce en particulier à un déflecteur, une masse d'eau importante et constante par mètre cube d'air à traiter quelles que soient la nature et concentration des polluants, ce qui entraine une perte de charge élevée et donc une consommation énergétique importante. Ce dispositif n'est pas conçu pour mettre en oeuvre les différents mécanismes de filtration par voie humide tels que la création de surfaces humides à déplacements adaptés au mouvement des polluants, le traitement thermique pour condenser ou favoriser la mise en solution ou le transfert gaz liquide par réaction chimique. Le mode de fonctionnement unique de ce dispositif limite fortement la possibilité de traitement de nombreuses formes de pollution.

L'invention vise à remédier aux inconvénients précités. Elle vise aussi à réaliser simultanément un dispositif d'épuration de type cyclone humide à vortex unidirectionnel, peu onéreux et simple, dont la conception permet de s'adapter aux traitements de la plupart des pollutions de l'air ou autres gaz. L'invention est destinée aux applications de filtration par absorption dans les secteurs industriel, agricole, tertiaire, de la santé, domestique et permet la filtration de nombreux polluants, tels que des poussières, aérosols, microbes, moisissures, pollens ou autres aérobiocontaminants, ainsi que des gaz solubles condensables ou réactifs.

### Exposé de l'invention

Le dispositif de filtration par voie humide de gaz pollués, comprend, selon l'invention, un espace principal de forme tubulaire horizontale ou inclinée vers le haut , renfermant un volume prédéterminé de liquide absorbant, de préférence de l'eau, un moyen d'aspiration à la sortie ou de soufflage à l'entrée du dispositif et une entrée tangentielle des gaz chargés de polluants dans l'espace principal de façon à générer un flux de circulation entre l'entrée et la sortie dont un vortex liquide-gaz-polluants dans ledit espace principal caractérisé en ce que l'espace principal débouche sur un espace de filtration par impaction comprenant une paroi verticale ou quasi verticale d'impaction et de ruissellement destinée à supprimer le réenvol des vésicules ou particules résiduelles.

Selon un premier mode préférentiel de réalisation de l'invention, l'espace principal et l'espace d'impaction sont constitués d'une enceinte tubulaire à vortex, de section circulaire ou elliptique comportant une partie horizontale suivie d'une partie coudée vers le haut dont la paroi intérieure périphérique constitue la paroi d'impaction et de ruissellement.

Selon un autre mode de réalisation de l'invention, l'espace principal est constitué d'une enceinte tubulaire à vortex, horizontale ou inclinée de section arrondie ou elliptique entourée d'une enveloppe délimitant une chambre dont la paroi verticale ou quasi verticale à la sortie du tuyau constitue la paroi d'impaction et de ruissellement.

Selon l'invention, plusieurs paramètres de réglages, à savoir la section de l'entrée tangentielle, l'inclinaison par rapport à l'horizontal de l'espace principal tubulaire, le volume de liquide absorbant, le débit des flux gazeux déterminent le nombre, compris entre deux et cinq, de zones d'absorption entre l'entrée et la sortie du dispositif. Ces paramètres sont prédéterminés ou calculés avant la construction du dispositif en fonction des polluants à éliminer. Selon certains modes de réalisations le dispositif inclut, avantageusement, des organes de réglages de ces paramètres afin de pouvoir les modifier, en temps réel, lorsque le dispositif est en fonctionnement opérationnel. Le dispositif comportera l'ensemble de ces organes de réglage ou quelques-uns seulement, par exemple le réglage de la section d'entrée.

Dans le sens de circulation des gaz, ces cinq zones comprennent :
L'entrée où l'air impacte en profondeur le liquide dont la surface se déploie sur l'ensemble de la section du tube,
La zone de formation du film pariétale, par accélération tangentielle pour le transfert des particules supérieures à 10 micromètres,
La zone d'entrainement tangentielle ou le vortex liquide permet de couvrir la totalité des surfaces pariétales ; ce vortex est réglable en longueur et dédiée à la filtration par absorption des particules de 1 à 10 micromètres.

La zone centrale à diffusion turbulente où les gouttelettes traversent la section de passage des gaz et des particules fines à trajectoires aléatoires.

La zone de filtration par impaction sur la paroi verticale supprimant le réenvol des vésicules résiduelles dont l'impaction créé et alimente un ruissellement continu favorable à la rétention et l'écoulement des particules.

Les avantages du dispositif selon l'invention sont nombreux, dont sa polyvalence, en effet, il permet de filtrer de nombreux polluants solides en suspension dans l'air ou autres gaz. Il permet également de piéger des polluants gazeux comme le H2S (sulfure d'hydrogène) si le liquide absorbant est réactif comme par exemple une eau sodée. Les réglages permettent de modifier les zones de contact liquides, en termes de vitesse, longueur, surface et déplacement. Le dispositif permet d'adapter efficacement tout type de mouvement favorisant les mécanismes de filtration par absorption physique ou chimique des gaz et particules, grâce à la maitrise du positionnement du liquide de contact. La maitrise des trajectoires améliore l'efficacité du transfert par absorption et permet de limiter fortement la masse de liquide mis en mouvement ainsi que les pertes de charges tout en augmentant le contact liquide/gaz.

Le dispositif selon l'invention peut être de petite taille pour des usages domestiques ou comme appareil de prélèvement pour échantillonnages destinés à l'analyse des aérobiocontaminants de l'air ou autre gaz mais également de grande taille pour être utilisé dans un environnement industriel. Selon une variante, lorsqu'il est nécessaire d'éliminer ou de réduire la charge en bio contaminant, un équipement de type UV est implanté très efficacement dans le flux turbulent de la faible quantité de liquide absorbant mis en mouvement, ou, selon une autre variante, une oxydation avancée par ozonisation est mis en place dans le liquide absorbant.

D'autres avantages découleront de la description détaillée d'exemples de réalisation de l'invention, ci-après.

### Description détaillée

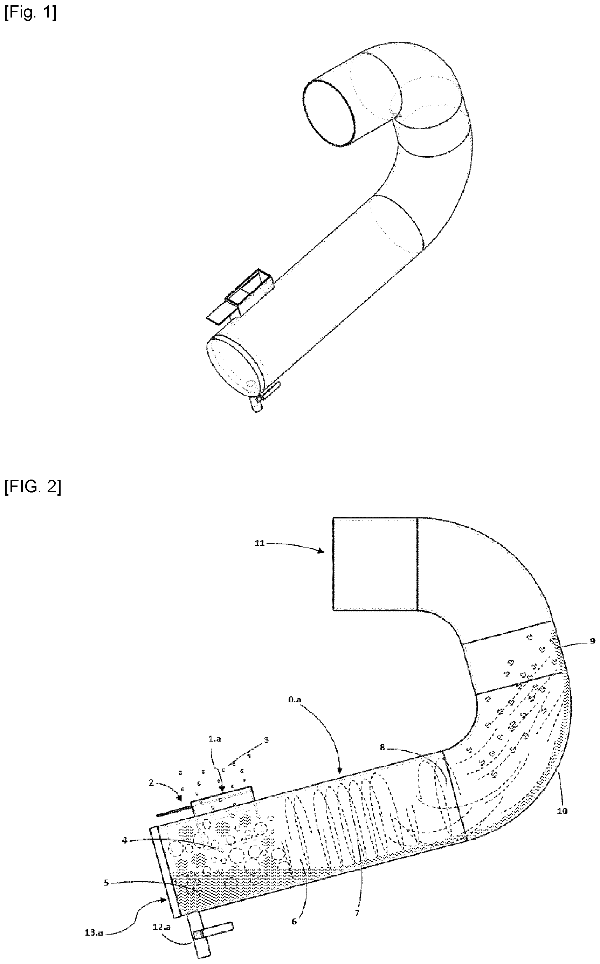

Dans les descriptions qui suivent, faites à titre d'exemple, on se réfère aux dessins annexés dans lesquels l'invention est illustrée :
L'ensemble des figures [Fig. 1] et [Fig. 2] représente un mode privilégié de réalisation du dispositif de l'invention constitué d'un filtre coudé à chambre unique. La figure [Fig. 1] représente une vue filaire en trois dimensions. La figure [Fig. 2] représente une vue filaire de face avec représentation des mouvements aérauliques et liquides.

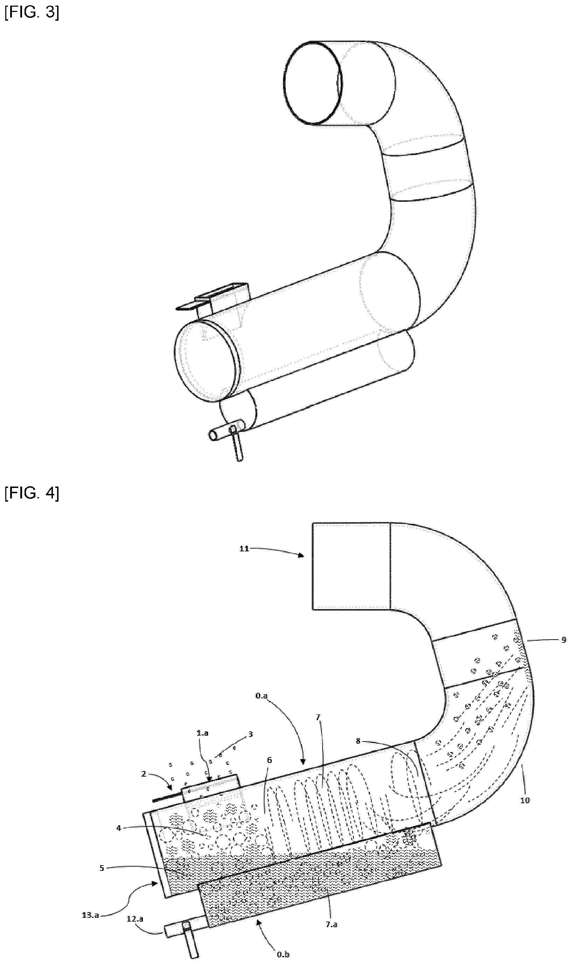

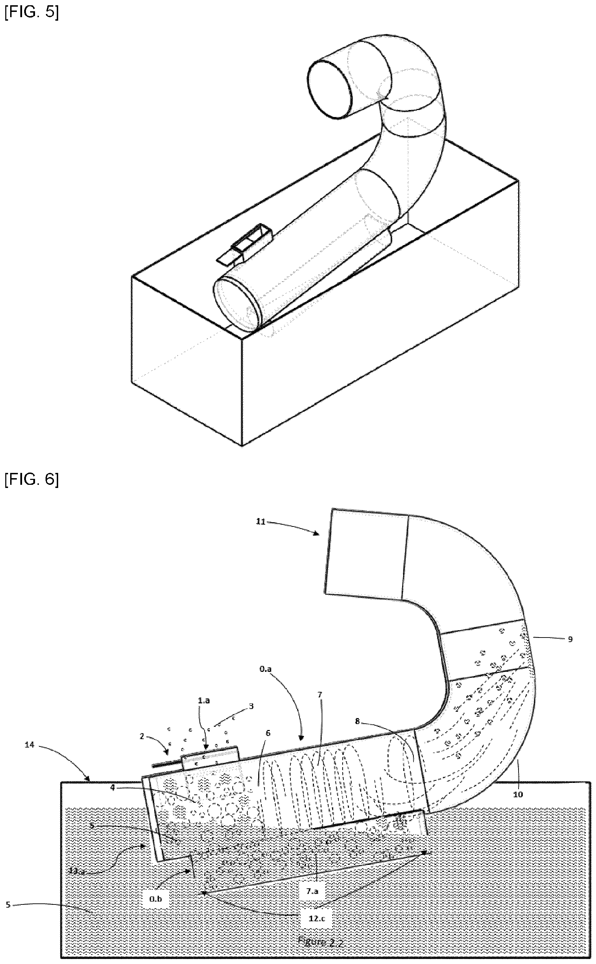

L'ensemble des figures [Fig. 3] ; [Fig. 4] ; [Fig. 5] et [Fig. 6] représente un perfectionnement et variante du dispositif constitué d'un filtre coudé à chambre double. Les figures [Fig. 3] et [Fig. 4] représentent une variante dont le liquide de filtration par absorption est en circuit fermé. Les figures [Fig. 5] et [Fig. 6] représentent une variante dont le liquide absorbant est en circuit ouvert vers un bac de rétention des polluants. Les figures [Fig. 3] et [Fig. 5] sont des vues filaires en trois dimensions. Les figures [Fig. 4] et [Fig. 6] sont des vues filaires de profil avec représentations des mouvements aérauliques et liquides.

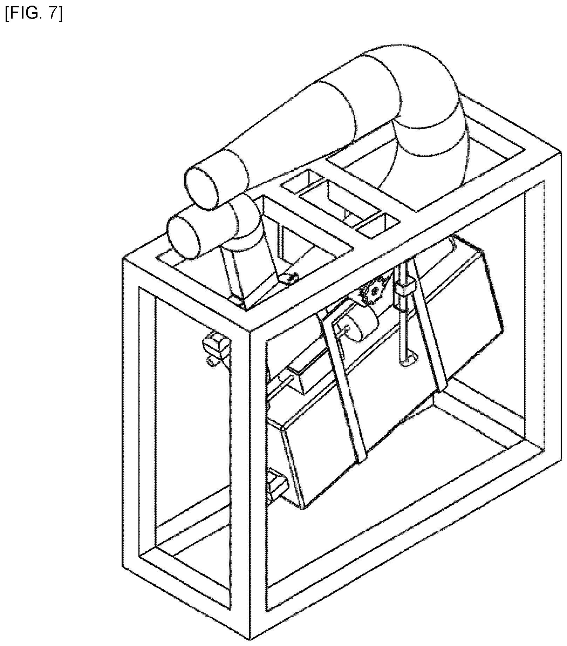

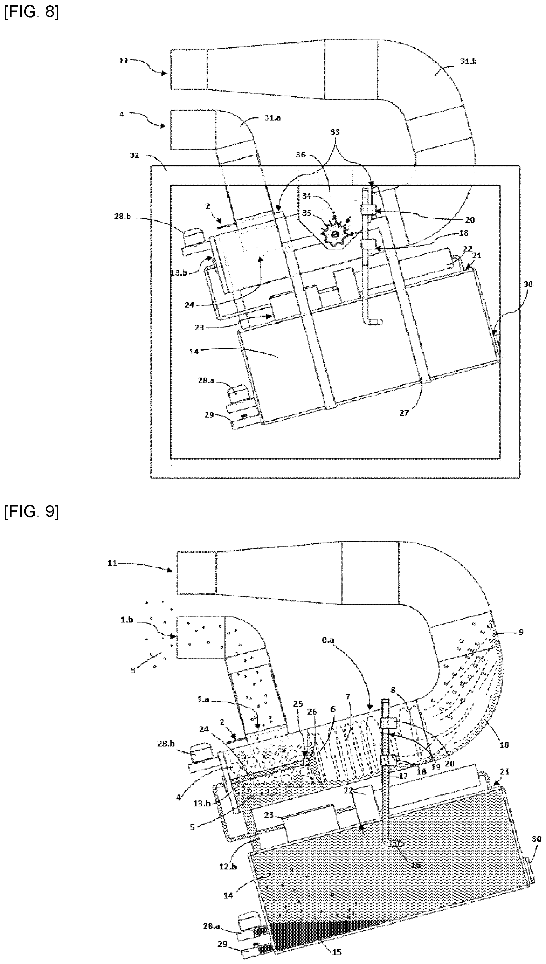

L'ensemble des figures [Fig. 7] ; [Fig. 8] et [Fig. 9] représente une version intégrée du filtre absorbant coudé à chambre unique. La figure [Fig. 7] représente une vue filaire en trois dimensions. La figure [Fig. 8] représente une vue filaire de profile et la figure [Fig. 9] est une vue filaire de profil avec représentations des mouvements aérauliques et liquides.

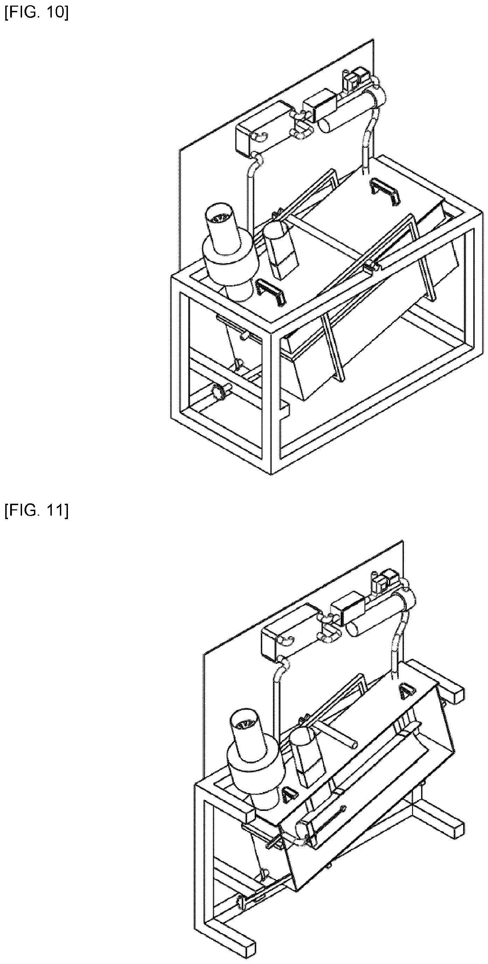

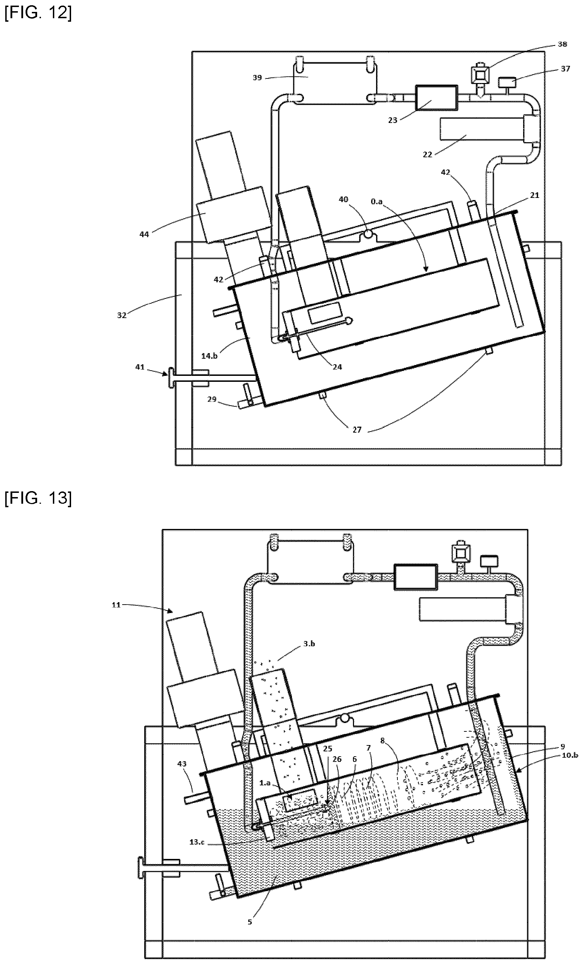

L'ensemble des figures [Fig. 10] ; [Fig. 11] ; [Fig. 12] et [Fig. 13] représente une version intégrée du filtre absorbant droit à immersion partielle. La figure [Fig. 10] représente une vue filaire en trois dimensions. La figure [Fig. 11] est une vue en coupe filaire en 3 dimensions. La figure [Fig. 12] est une vue en coupe filaire de profil. La figure [Fig. 13] est une vue filaire de profil avec représentations des mouvements aérauliques et liquides.

En référence à la figure [Fig. 2], le dispositif comporte un espace tubulaire **(O.a)** de filtration à chambre unique, ayant la forme d'un tube coudé utilisé pour la filtration sélective par absorption, ponctuelle ou occasionnelle, des poussières, aérosols liquides ou solides, aérobiocontaminants, gaz solubles ainsi qu'aux particules à température élevée, incandescentes ou non constituants les particules polluantes **(3)** à traiter.

En référence aux figures [Fig. 1] et [Fig. 2] le dispositif de filtration de gaz pollués **(3),** selon l'invention, est constitué d'une enceinte tubulaire **(0a)** en position horizontale ou inclinée de section arrondie de préférence circulaire ou elliptique renfermant un volume prédéterminé de liquide **(5)** tel que l'eau ou un autre liquide, d'une vanne **(12.a)** et un bouchon amovible simple **(13.a)** pour la maintenance et vidange du liquide absorbant, d'une entrée tangentielle de l'air pollué **(1.a)** à une extrémité de l'enceinte générant un vortex central liquide-gaz-polluants dans l'enceinte, d'une sortie des gaz dépollués **(11)** à l'autre extrémité de l'enceinte. L'obturateur coulissant **(2),** permet de régler la section d'entrée. La sortie des gaz **(11)** formant un prolongement de l'enceinte **(O.a)** tubulaire, est orientée vers le haut, la zone de sortie au-dessus du niveau du liquide **(5)** constituant la zone d'impaction et de ruissellement **(9)** destinée à supprimer le réenvol des vésicules ou particules résiduelles.

Selon un mode préférentiel de réalisation, le prolongement vers le haut de l'enceinte forme un coude dévésiculeur par impaction sur film ruisselant **(10).**

Les gaz circulent dans l'enceinte grâce à un ventilateur-extracteur à variation de vitesse non représenté, monté à la sortie du dispositif.

Les réglages permettent de modifier les zones de contact liquides, en termes de vitesse, longueur, surface et déplacement. Le dispositif permet d'adapter efficacement tout type de mouvement favorisant le mécanisme de filtration par absorption physique ou chimique des gaz et particules, grâce à la maitrise du positionnement du liquide de contact.

La géométrie du dispositif et les différents paramètres de réglages, permettent de créer jusqu'à cinq zones de filtrations entre l'entrée et la sortie du dispositif d'épuration. Ces zones correspondent aux profils de concentration des éléments pollués dans lesquelles est distribué prioritairement le liquide absorbant.

Dans le sens de circulation des gaz, ces zones comprennent :
▪ La zone d'entrée impactante des gaz pollués **(4),** à section réglable, où l'air impacte en profondeur le liquide dont la surface se déplace sur l'ensemble de la section d'entrée du tube au moyen du ventilateur-extracteur à débit variable ; cette zone de préfiltration permet de filtrer par absorption la plupart des plus grosses particules.
▪ La zone de formation du film pariétal **(6)** de faible longueur, créée par accélération tangentielle, est dédiée au transfert des particules supérieures à 10 micromètres.
▪ La zone d'entrainements tangentiels **(7)** où le vortex liquide est dédié à la filtration par absorption des particules de 1 à 10 micromètres ; l'allure de l'écoulement vortex liquide est déterminée en longueur, vitesse et épaisseur principalement par l'adaptation des débits gazeux.
▪ La zone centrale d'éclatement du film et de diffusion turbulente **(8)** où les surfaces de contact liquide/gaz sont augmentées par le déplacement des surfaces liquides en entrée, et la formation des gouttelettes par fractionnement et arrachement du film pariétal ; ces gouttelettes traversent la section de déplacement aléatoire des gaz et des particules fines. Le choix des réglages de cette zone dépend principalement de la nature physicochimique des éléments polluants et de leurs concentrations.
▪ La zone de filtration par impaction inertielle sur une sortie coudée **(9, 10)**, supprime le réenvol des vésicules résiduelles qui créent et alimentent un film tombant à ruissellement continu.

Pour créer le contact liquide/gaz sur les zones de passage préférentiel des polluants, la procédure est la suivante :
▪ Remplissage du liquide absorbant par la vanne de vidange **(12.a)** ou l'une ou l'autre extrémité du dispositif **(1.a ou 11).**
▪ Réglage de l'ouverture de la section d'entrée tangentielle.
▪ Réglage de l'inclinaison de l'enceinte.
▪ Réglage des vitesses d'air.
▪ Vidange du liquide chargé après un temps d'utilisation dépendant de la nature, quantité et concentration des polluants.

La maitrise des trajectoires de contact permet de distribuer et d'augmenter les aires interfaciales uniquement sur les zones de déplacement propres à chaque composé polluant et de limiter fortement la masse de liquide mis en mouvement et donc la quantité d'énergie nécessaire à la mise en oeuvre de l'écoulement liquide. Sa conception ne nécessite pas de garnissage, de dévésiculeurs, de déflecteurs qui sont générateurs de fortes pertes de charges.

L'utilisation du dispositif pour un usage domestique ou tertiaire concerne principalement les aspirateurs centralisés ou mobiles, le traitement de l'air intérieur, et le rafraîchissement adiabatique. La zone impactante d'entrée et la zone de formation du film pariétal sont les plus sollicitées pour la fonction d'aspirateur ; la zone centrale est plus particulièrement concernée pour le traitement de l'air ambiant.

L'application du dispositif de base concerne également les secteurs d'activité de l'industrie manufacturière, de la dépollution atmosphérique, en particulier dans les grandes villes, les lieux confinés à fort rassemblement humain comme par exemple l'atmosphère des métros ainsi que du tertiaire tel que bureaux, écoles, maisons de retraite, vestiaires, etc. L'application du dispositif concerne en priorité la filtration des poussières et aérosols pour lesquels le liquide de transfert est principalement de l'eau. Les dispositifs sont prévus pour traiter des débits horaires d'air de cent à plusieurs dizaines de milliers de mètres cube par heure et par dispositif.

Le choix du liquide absorbant peut varier en fonction de l'application.

En référence à la figure [Fig. 3], cette variante technique comporte une chambre additionnelle **(0.b)** sous la chambre principale **(0.a)** et communiquant avec cette dernière pour filtrer en continu des liquides chargés de poussières, particules, aérosols et gaz solubles ou réactifs pour recyclage du liquide d'absorption.

Dans la chambre inférieure **(0.b)** communiquant avec la chambre principale déjà décrite (figure [Fig. 3] et [Fig. 4]), il est formé une zone d'impaction de surface et de contact, augmentée par la formation d'un bullage intense favorisant la rétention des particules les plus fines et une zone d'épuration du liquide chargé, en particulier par décantation, destinée à son recyclage. L'ensemble de cette zone constitue la zone de bullage et décantation **(7.a).**

Pour un fonctionnement occasionnel les deux extrémités sont fermées et équipées d'une vanne de vidange **(12.a).**

Les figures [Fig. 5] et [Fig. 6] représentent un mode de réalisation permettant la filtration par absorption en continu des poussières, particules, aérosols et gaz solubles ou réactifs et filtration du liquide absorbant **(5)** chargé en polluant pour recyclage. Les deux extrémités de la chambre inférieures **(12.c)** sont normalement ouvertes et immergées dans un bac de décantation **(14)** destiné au recyclage du liquide absorbant **(5).**

En référence aux figures [Fig. 7] ; [Fig. 8] et [Fig. 9], il est représenté un dispositif intégré dont le mode de fonctionnement est entièrement autonome. Il comprend le filtre coudé à chambre unique représentée à la figure [Fig. 2]. Le dispositif comprend une chambre principale **(0.a)** à laquelle s'ajoute une buse **(25)** un tuyau (24) traversant le bouchon amovible percé **(13.b),** un bac de décantation **(14)** et un ensemble d'éléments assurant les fonctions de transfert telles que la régulation, la vidange et l'épuration du liquide absorbant **(5),** le tout fixé sur un châssis **(32)** permettant le réglage de l'inclinaison du dispositif de filtration.

Ce dispositif comprend en outre une zone d'entrée impactante des gaz pollués (4) par laquelle pénètre le flux d'air chargé en particules polluantes **(3)** à traiter via le coude flexible d'entrée d'air **(31.a)** ; un obturateur coulissant **(2)** pour le réglage de la section d'entrée ; la chambre principale **(0.a)** de filtration ; un coude flexible de sortie d'air **(31.b)** et une sortie d'air traité **(11).** Les coudes flexibles ont pour fonction de compenser l'inclinaison du dispositif. La chambre principale est maintenue par des bagues de fixation **(33)** auxquelles est fixé le support **(27)** du bac de décantation **(14).** L'ensemble « bagues de fixation et support » maintenant le dispositif est lié au châssis **(32)** par un axe perpendiculaire au plan, pouvant pivoter sur lui-même, et fixé par le bouton de verrouillage de l'inclinaison du dispositif **(35).** L'indicateur d'inclinaison **(34)** fixé sur la plaque de support du dispositif **(36)** indique l'angle d'inclinaison du dispositif par rapport au châssis **(32).** En complément du dispositif et des mouvements aérauliques et hydrauliques décrit dans le dispositif de la figure [Fig. 2], ce mode de réalisation comprend une buse de pulvérisation du liquide d'absorption recyclé. Le système de pulvérisation est sélectionné pour obtenir un spectre granulométrique très resserré, proche de la limite des capacités du dispositif à retenir les gouttelettes. Cette buse est située au niveau de l'axe de la chambre principale **(0.a)** ; sa distance par rapport à l'entrée tangentielle est réglable via le tuyau d'alimentation de la buse **(24)** pour se situer au niveau de la formation du vortex.

Les gouttelettes traversent la totalité de la section de passage des gaz, se chargent en polluants (particules et gaz) et sont absorbées par le vortex liquide et la paroi impactante **(9 et 10).** Le système de pulvérisation produit une pulvérisation conique **(26)** permettant de réaliser une importante économie d'eau tout en augmentant considérablement les surfaces absorbantes, améliorant ainsi très efficacement la captation de particules fines et des gaz par absorption mécanique ou chimique. La faible longueur du trajet des fines gouttelettes entre leur point d'émissions par la buse et leur zone d'impaction sur la paroi d'impaction, limite les phénomènes de coalescence et d'évaporation, permettant ainsi de conserver en grande partie les surfaces d'échange initiales.

Le liquide absorbant chargé en polluant, est transféré dans le bac de décantation **(14)** via le tuyau de transfert du liquide absorbant **(12.b).** Les particules retenues dans le liquide tombent au fond du bac forment un sédiment **(15).** La vanne manuelle de vidange **(29)** et le trou d'homme de maintenance **(30)** permettent le nettoyage et la maintenance manuelle du système. Le liquide absorbant du bac de décantation est réinjecté dans la chambre principale **(0.a)** via la pompe à liquide **(23)** et le filtre à liquide **(22)** qui a pour fonction de filtrer les particules fines résiduelles non décantées ou les gaz. Le piquage du liquide absorbant **(21)** est positionné à un niveau haut afin de limiter la réinjection de particules fines.

Une jauge de niveau du liquide absorbant **(17),** fixe par rapport au châssis **(32)** est reliée au bac de décantation par un piquage et un tuyau flexible **(16)** assurant la mobilité du bac par rapport à la jauge. La jauge est équipée d'un capteur de niveau bas **(18)** et un capteur de niveau haut **(20)** encadrant le niveau du liquide absorbant **(19).** Ces capteurs sont reliés à un système de régulation (non représenté) permettant de compenser les pertes ou gains de volumes liés aux phénomènes de condensation, absorption, ou évaporation. L'électrovanne de vidange **(28.a)** est ouverte lorsque le niveau haut est atteint, actionnant ainsi l'évacuation d'une partie des sédiments. L'électrovanne de remplissage **(28.b)** est ouverte lorsque le niveau bas est atteint. Le remplissage est effectué au niveau de la chambre principale **(0.a).**

Selon un autre perfectionnement représenté par les figures [Fig. 10] ; [Fig. 11] ; [Fig. 12] et [Fig. 13], le dispositif comporte une chambre enveloppante **(14.b)** servant de bac contenant la première enceinte afin de constituer une réserve et un circuit de recirculation du liquide en vue de son traitement. Selon cette variante, la paroi verticale d'impaction et de ruissellement est constituée par la paroi intérieure d'extrémité de la deuxième enceinte.

Le dispositif de base, entouré de la chambre enveloppante **(14.b),** est mis en dépression par un extracteur **(44)** à débit variable qui assure la circulation du gaz à traiter et du gaz traité. Pour assurer la circulation en boucle, le liquide absorbant **(5)** entre dans la partie basse de l'enceinte du tube à vortex par une légère ouverture située sur le bouchon amovible partiellement ouvert **(13.c).** L'air ou le gaz épuré et le liquide absorbant ressortent à l'autre extrémité et s'impactent sur le film ruisselant de la paroi d'impaction **(10.b).** Judicieusement, l'étanchéité à l'air de l'ouverture du bouchon est obtenue grâce à une hauteur d'eau dépassant suffisamment la hauteur de cette ouverture. Dans le cas des traitements des particules, le recyclage du liquide peut se faire sans pompe ni joint ; le déplacement de l'air, l'ouverture du bouchon de l'enceinte centrale et l'inclinaison du dispositif provoquent la circulation en boucle du liquide tout en conservant la maitrise de ses déplacements.

Ce dispositif de filtration de l'air en continu intègre les fonctions de régulation thermique, condensation, transfert gaz liquide par absorption mécanique ou chimique, mis en solution, filtration des liquides, acquisition et traitement des données, supervision et pilotage à distance. Ce dispositif industriel est également un outil d'étude pour l'optimisation et la validation des paramètres de fonctionnement ou de formation au pilotage d'une installation.

Pour répondre au besoin de mise en oeuvre des différents mécanismes de transfert, le dispositif est équipé d'un groupe thermique froid et/ou chaud (non représenté), d'un échangeur de chaleur liquide/liquide **(39)** pour assurer les fonctions de refroidissement des liquides, condensations, ou régulation des températures de réaction, d'un système de pulvérisation pour finaliser le transfert des gaz par réaction **(24, 25 et 26),** mise en solution et retenue des aérosols par contact avec les gouttelettes traversant la section de passage des gaz, d'un boitier de régulation automatisé des traitements acides, basiques et oxydants via le capteur de qualité du liquide réactif **(37)** et l'électrovanne d'injection du liquide réactif **(38),** d'un bac de rétention des liquides constitué par la chambre enveloppante **(14.b),** d'une pompe à liquide **(23)** qui permet la circulation du liquide absorbant via le picage **(21)** et le filtre à particules solides ou un filtre adsorbant ou autres filtres spécialisés, pour autres substances absorbées**(22).**

Le dispositif de filtration par absorption est fixé à un axe de rotation du dispositif (40) lui-même posé sur une encoche sur le châssis (32) assurant la liaison de pivot. Le réglage de l'angle est assuré par la poignée de réglage d'angle (41). Deux poignées de manutentions (42) permettent l'ouverture de la chambre enveloppante (14.b) pour effectuer sa maintenance ainsi que le transport de celle-ci.

L'air pollué dit « gaz porteur » est mis en mouvement à des débits et pressions variables par un ventilateur équipé d'un variateur de vitesse et entre dans un tube par une entrée tangentielle.

L'adaptation des écoulements pour un meilleur contact entre les différents milieux entrant dans l'enceinte est réalisée par des mécanismes de réglage simples : une plaque coulissante située dans la section de l'entrée tangentielle du tube central pour en adapter la géométrie de surface et conditionner les écoulements liquides et gazeux (non représenté sur les figures [Fig. 10], [Fig. 11], [Fig. 12] et [Fig. 13]), un variateur de vitesse pour l'extracteur d'air **(44)** , un système d'ajustement de l'inclinaison du dispositif et d'un jeu d'électrovanne **(38)** pour le remplissage et de vanne pour la vidange **(29)** ainsi qu'un système de trop-plein **(43)** de sécurité.

Le dispositif selon l'invention est polyvalent.

A titre d'exemples non limitatifs, les dispositifs, selon l'invention, sont utilisés pour le traitement des aérosols comme les brouillards d'huiles, de peintures, des ambiances chargées en poussières ou pollens ou gaz solubles, condensables ou réactif.

Le dispositif a été testé pour traiter des débits industriels de 300m³/h. Il est également un outil pour l'optimisation et la validation des paramètres de fonctionnement ou de formation au pilotage d'une installation.

Il permet également l'absorption chimique de gaz odorants et dangereux à cinétique de réaction rapide tels que l'H2S, mercaptan ou ammoniac en ambiance chaude et humide, chargé en aérosols. Le dispositif contient de l'eau, un mélange aqueux acide, basique ou oxydant. L'efficacité du contact liquide gaz du dispositif permet de limiter aux stricts besoins la quantité de liquide à mettre en mouvement ce qui améliore l'efficacité de l'opération de transfert, la consommation énergétique et réduit l'encombrement.

Le dispositif peut être utilisé en série sur deux étages d'absorption, comme par exemple un acide et l'autre oxydo-basique.

Selon les tests réalisés en laboratoire, le rendement d'abattement de l'H2s, méthyl mercaptan et ammoniac est supérieure à 99% avec réactifs.

## Revendications

1. Dispositif de filtration par absorption de gaz pollués comprenant un espace principal de forme tubulaire horizontale ou inclinée vers le haut , renfermant un volume prédéterminé de liquide absorbant, un moyen d'aspiration à la sortie ou de soufflage à l'entrée du dispositif et une entrée tangentielle des gaz chargés de polluants dans l'espace principal de façon à générer un flux de circulation entre l'entrée et la sortie dont un vortex liquide-gaz-polluants dans ledit espace principal **caractérisé en ce que** l'espace principal (O.a) débouche sur un espace de filtration par impaction comprenant une paroi verticale ou quasi verticale d'impaction et de ruissellement (10, 10b) destinée à supprimer le réenvol des vésicules ou particules résiduelles.

2. Dispositif selon la revendication 1 **caractérisé en ce que** l'espace principal et l'espace de filtration par impaction sont constitués d'une enceinte tubulaire à vortex, de section circulaire ou elliptique comportant une partie horizontale suivie d'une partie coudée vers le haut dont la paroi intérieure périphérique (10) constitue la paroi d'impaction et de ruissellement.

3. Dispositif selon la revendication 2 **caractérisé en ce qu'**il comprend une chambre inférieure (0.b) parallèle et communiquant avec l'espace principal (0.a), pour former une zone de bullage, de décantation (7a) et d'impaction du vortex.

4. Dispositif selon l'une quelconque des revendications précédentes **caractérisé en ce qu'**une buse de pulvérisation (25) est installée à l'intérieur de l'espace principal (0.a).

5. Dispositif selon la revendication 1 **caractérisé en ce que** l'espace principal est constituée d'une enceinte tubulaire à vortex, horizontale ou inclinée de section arrondie ou elliptique entourée d'une enveloppe délimitant une chambre (14b) dont la paroi verticale ou quasi verticale à la sortie de l'espace principal constitue la paroi d'impaction et de ruissellement (10b).

6. Dispositif selon la revendication 2 ou 3 ou 4 ou 5 **caractérisé en ce qu'**il comprend un bac de décantation (14) destiné au traitement final du liquide absorbant (5) et/ou à son recyclage.

7. Dispositif selon l'une quelconque des revendications 2 à 6 **caractérisé en ce que** le dispositif de filtration est fixé sur un châssis (32), et **en ce que** des moyens (34, 35) sont prévus pour incliner le dispositif de filtration par rapport au châssis.

8. Dispositif selon l'une quelconque des revendications précédentes **caractérisé en ce qu'**il comprend des moyens de réglages de la section de l'entrée tangentielle, de l'inclinaison par rapport à l'horizontal de l'espace principal tubulaire, du volume de liquide absorbant, du débit des flux gazeux.

9. Procédé de mise en oeuvre du dispositif selon l'une quelconque des revendications précédentes **caractérisé en ce que** la mise en mouvement des gaz à traiter est assurée par un ventilateur-extracteur (12 ou 44) à vitesse réglable installé à la sortie du dispositif.

10. Procédé de mise en oeuvre du dispositif selon la revendication 9 **caractérisé en ce que** pour assurer la circulation en boucle du liquide (5), ce liquide (5) pénètre dans la partie basse de l'enceinte du tube à vortex par une légère ouverture située sur un bouchon amovible partiellement ouvert (13.c), l'étanchéité au gaz de l'ouverture du bouchon est obtenue grâce à une hauteur d'eau dépassant suffisamment la hauteur de cette ouverture.

11. Procédé de mise en oeuvre du dispositif selon la revendication 10 **caractérisé en ce que**, la circulation en boucle du liquide absorbant (5) permettant son recyclage est obtenue par le déplacement du gaz, l'ouverture du bouchon (13c) de l'enceinte du tube à vortex et l'inclinaison du dispositif.

12. Procédé de mise en oeuvre du dispositif selon l'une quelconque des revendications 9 à 11 **caractérisé en ce que** la section d'entrée des gaz polluants est réglables au moyen d'une plaque coulissante.

13. Utilisation du dispositif selon l'une quelconque des revendications 1 à 8 pour filtrer des particules fines ou très fines.

14. Utilisation du dispositif selon l'une quelconque des revendications 1 à 8 pour filtrer des gaz odorants, solubles et/ou réactifs, préférentiellement le H₂S (sulfure d'hydrogène).

## Patentansprüche

1. Vorrichtung zur Absorptionsfiltration von verunreinigten Gasen, umfassend einen Hauptraum mit horizontaler oder nach oben geneigter Rohrform, der ein vorbestimmtes Volumen einer absorbierenden Flüssigkeit umschließt, ein Mittel zum Ansaugen am Auslass oder zum Blasen am Einlass der Vorrichtung und einen tangentialen Einlass der mit Schadstoffen belasteten Gase in den Hauptraum, so dass eine Zirkulationsströmung zwischen dem Einlass und dem Auslass erzeugt wird, darunter ein Flüssigkeits-Gas-Schadstoff-Vortex in dem Hauptraum, **dadurch gekennzeichnet, dass** der Hauptraum (O.a) in einen Impaktionsfilterraum mündet, der eine vertikale oder quasi-vertikale Impaktions- und Rieselwand (10, 10b) umfasst, die dazu bestimmt ist, die erneute Suspendierung von Vesikeln oder Restpartikeln zu unterdrücken.

2. Vorrichtung nach Anspruch 1, **dadurch gekennzeichnet, dass** der Hauptraum und der Impaktionsfilterraum aus einer rohrförmigen Wirbelummantelung mit kreisförmigem oder elliptischem Querschnitt bestehen, die einen horizontalen Teil gefolgt von einem nach oben gebogenen Teil aufweist, dessen innere Umfangswand (10) die Impaktions- und Rieselwand bildet.

3. Vorrichtung nach Anspruch 2, **dadurch gekennzeichnet, dass** sie eine untere Kammer (0b) umfasst, die parallel zum Hauptraum (O.a) verläuft und mit diesem in Verbindung steht, um eine Blasenbildungs-, Dekantierungs- (7a) und Impaktionszone des Wirbels zu bilden.

4. Vorrichtung nach einem der vorhergehenden Ansprüche, **dadurch gekennzeichnet, dass** eine Sprühdüse (25) innerhalb des Hauptraums (O.a) installiert ist.

5. Vorrichtung nach Anspruch 1, **dadurch gekennzeichnet, dass** der Hauptraum aus einer rohrförmigen, horizontalen oder geneigten Wirbelummantelung mit rundem oder elliptischem Querschnitt besteht, die von einer Hülle umgeben ist, die eine Kammer (14b) begrenzt, deren vertikale oder quasi-vertikale Wand am Auslass des Hauptraums die Impaktions- und Rieselwand (10b) bildet.

6. Vorrichtung nach Anspruch 2 oder 3 oder 4 oder 5, **dadurch gekennzeichnet, dass** sie einen Dekantierbehälter (14) umfasst, der zur Endbehandlung der absorbierenden Flüssigkeit (5) und/oder zu deren Recycling bestimmt ist.

7. Vorrichtung nach einem der Ansprüche 2 bis 6, **dadurch gekennzeichnet, dass** die Filtervorrichtung an einem Gestell (32) befestigt ist und dass Mittel (34, 35) vorgesehen sind, um die Filtervorrichtung in Bezug auf das Gestell zu neigen.

8. Vorrichtung nach einem der vorhergehenden Ansprüche, **dadurch gekennzeichnet, dass** sie Mittel zur Einstellung des Querschnitts des tangentialen Einlasses, der Neigung des rohrförmigen Hauptraums gegenüber der Horizontalen, des Volumens der absorbierenden Flüssigkeit, des Durchflusses der Gasströme umfasst.

9. Verfahren zum Einsatz der Vorrichtung nach einem der vorhergehenden Ansprüche, **dadurch gekennzeichnet, dass** das in Bewegung Setzen der zu behandelnden Gase durch ein Absauggebläse (12 oder 44) mit einstellbarer Geschwindigkeit gewährleistet wird, das am Auslass der Vorrichtung installiert ist.

10. Verfahren zum Einsatz der Vorrichtung nach Anspruch 9, **dadurch gekennzeichnet, dass** zur Gewährleistung des Kreislaufs der Flüssigkeit (5) diese Flüssigkeit (5) durch eine geringfügige Öffnung, die sich auf einem teilweise geöffneten, abnehmbaren Stopfen (13.c) befindet, in den unteren Teil der Ummantelung des Wirbelrohrs eindringt, wobei die Gasdichtigkeit der Öffnung des Stopfens durch eine Wasserhöhe erreicht wird, die die Höhe dieser Öffnung ausreichend übersteigt.

11. Verfahren zum Einsatz der Vorrichtung nach Anspruch 10, **dadurch gekennzeichnet, dass** der Kreislauf der absorbierenden Flüssigkeit (5), der ihr Recycling ermöglicht, durch die Bewegung des Gases, die Öffnung des Stopfens (13c) der Ummantelung des Wirbelrohrs und die Neigung der Vorrichtung erreicht wird.

12. Verfahren zum Einsatz der Vorrichtung nach einem der Ansprüche 9 bis 11, **dadurch gekennzeichnet, dass** der Einlassquerschnitt der verunreinigenden Gase mittels einer Schiebeplatte einstellbar ist.

13. Verwendung der Vorrichtung nach einem der Ansprüche 1 bis 8 zur Filterung von feinen oder sehr feinen Partikeln.

14. Verwendung der Vorrichtung nach einem der Ansprüche 1 bis 8 zur Filterung von geruchsbelasteten, löslichen und/oder reaktiven Gasen, vorzugsweise H₂S (Schwefelwasserstoff).

## Claims

1. A device for filtering by absorption of polluted gases, the device comprising a main space of tubular shape that is horizontal or inclined upwards, containing a predetermined volume of absorbent liquid, a suction means at the outlet or a blowing means at the inlet of the device, and a tangential inlet for the pollutant-laden gases into the main space so as to generate a circulation flow between the inlet and the outlet, including a liquid-gas-pollutant vortex in said main space, **characterized in that** the main space (O.a) opens out into a space for filtration by impaction comprising a vertical or quasi-vertical impaction and runoff wall (10, 10b) intended to prevent the re-entrainment of residual vesicles or particles.

2. Device according to claim 1, **characterized in that** the main space and the space for filtration by impaction consist of a tubular vortex enclosure of circular or elliptical cross section comprising a horizontal part followed by an upwardly elbowed part, the peripheral inner wall (10) of which constitutes the impaction and runoff wall.

3. Device according to claim 2, **characterised in that** it comprises a lower chamber (0b) parallel to and communicating with the main space (0.a), to form a zone for bubbling, settling (7a) and impaction of the vortex.

4. Device according to any one of the preceding claims, **characterized in that** a spray nozzle (25) is installed inside the main space (0.a).

5. Device according to claim 1, **characterized in that** the main space consists of a horizontal or inclined tubular vortex enclosure with a rounded or elliptical cross section surrounded by a jacket delimiting a chamber (14b), the vertical or quasi-vertical wall of which, at the outlet of the main space, constitutes the impaction and runoff wall (10b).

6. Device according to claim 2 or 3 or 4 or 5, **characterized in that** it comprises a settling tank (14) intended for the final treatment of the absorbent liquid (5) and/or for its recycling.

7. Device according to any one of claims 2 to 6, **characterized in that** the filtration device is fixed to a frame (32), and **in that** means (34, 35) are provided for tilting the filtration device relative to the frame.

8. Device according to any one of the preceding claims, **characterized in that** it comprises means for adjusting the cross-section of the tangential inlet, the inclination of the tubular main space with respect to the horizontal, the volume of absorbent liquid and the flow rate of the gas streams.

9. Method of operating the device according to any one of the preceding claims, **characterised in that** the gases to be treated are set in motion by an adjustable-speed extractor fan (12 or 44) installed at the outlet of the device.

10. Process of operation the device according to claim 9, **characterized in that,** in order to ensure the circulation of the liquid (5) in a loop, this liquid (5) enters the lower part of the enclosure of the vortex tube through a slight opening located on a partially open removable plug (13.c), the gas-tightness of the plug opening being obtained by a height of water sufficiently exceeding the height of this opening.

11. Method of operating the device according to claim 10, **characterized in that** the loop circulation of the absorbent liquid (5) allowing its recycling is obtained by the displacement of the gas, the plug opening (13c) of the vortex tube enclosure and the inclination of the device.

12. Method of operating the device according to any one of claims 9 to 11, **characterised in that** the cross-section of the pollutant gas inlet is adjustable by means of a sliding plate.

13. Use of the device according to any one claims 1 to 8 for filtering fine or very fine particles.

14. Use of the device according to any one of t claims 1 to 8 for filtering odorous, soluble and/or reactive gases, preferably H₂S (hydrogen sulphide).
